# EUROPÄISCHE PATENTSCHRIFT

(11) **EP 1 030 102 B1**
(45) Veröffentlichungstag und Bekanntmachung des Hinweises auf die Patenterteilung: **12.09.2007**
(21) Anmeldenummer: 00101112.1
(22) Anmeldetag: 20.01.2000
(51) Int. Cl.: F21V 8/00

(54) **Optische Anzeigevorrichtung für elektrische Haushaltsgeräte**
Optical display device for electrical domestic appliance
Dispositif d'affichage optique pour appareil électroménager

(30) Priorität: 29.01.1999 DE 19903587
(43) Veröffentlichungstag der Anmeldung: 23.08.2000
(73) Patentinhaber: BSH Bosch und Siemens Hausgeräte GmbH, 81739 München (DE)
(72) Erfinder: Fränzel, Bernd, 83301 Traunreut (DE); Willing, Achim, 96110 Schesslitz-Burgellern (DE)

(56) Entgegenhaltungen:
- DE-U- 29 513 771
- GB-A- 2 312 153
- US-A- 3 262 224
- US-A- 3 264 769

## Beschreibung

Die Erfindung geht aus von einer optischen Anzeigevorrichtung für elektrische Haushaltsgeräte nach dem Oberbegriff des Patentanspruchs 1.

Eine gattungsgemäße Anzeigeeinrichtung ist beispielsweise aus der DE 196 52 829 A1 bekannt, welche der GB 2 312 153 A entspricht.

Allgemein bekannt sind optische Anzeigevorrichtungen in Form von Leuchtkörpern, die in einer Gehäuseöffnung des Haushaltsgeräts befestigt sind. Dabei strahlen die Leuchtkörper Licht durch die Öffnung oder ragen aus der Öffnung über eine Oberseite des Gehäuses.

Um eine große Anzeigefläche zu erreichen, wird in der DE 91 11 037.8 U1 vorgeschlagen, einen Lichtleiter in Form einer Platte bzw. einer Scheibe zu verwenden, deren Stirnseite als Anzeigfläche dient. Hinter der Platte ist ein Leuchtkörper angeordnet, dessen Licht in die Platte eingekoppelt und zur Anzeigefläche geleitet wird.

Aus der oben zetierten DE 196 52 829 A1 ist ein elektrisches Haushaltsgerät mit einem Lichtleiter bekannt, der mit einer Anzeigefläche ein Gehäuse des Haushaltsgeräts im wesentlichen vollständig umzieht. In einer ersten Ausgestaltung wird der Lichtleiter von einer Platte gebildet.

In einer zweiten Ausgestaltung ist der Lichtleiter zweiteilig ausgeführt, und zwar aus einem plattenförmigen Bodenteil, an dem ein offener Leuchtring aus Lichtleitermaterial gehalten ist. Der Leuchtring weist eine flache Ringkörperplatte auf, von deren Oberseite sich am Umfang ein schmaler Rand nach oben erstreckt.

Schließlich sei noch auf die DE 295 13 771 U sowie die US 3,264,769 A hingewiesen,

Die Aufgabe der Erfindung besteht darin, eine kostengünstige optische Anzeigevorrichtung mit einem hohen Wirkungsgrad zu schaffen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Um einen hohen Wirkungsgrad zu erreichen, muß das abgestrahlte Licht eines Leuchtkörpers möglichst vollständig in den Lichtleiter eingekoppelt werden. Dies kann mit einem an einen Lichtleiter angepaßten kostenintensiven Leuchtkörper erreicht werden, der Licht in einem kleinen Abstrahlwinkel direkt in den Lichtleiter abstrahlt. Bei der erfindungsgemäßen Lösung wird ein Leuchtkörper verwendet, der seitlich rundum Licht abstrahlt. Der Leuchtkörper ist seitlich rundum, vorzugsweise vollständig von einem Lichtleiter umschlossen, der rundum Licht zur Weiterleitung zur Anzeigefläche aufnimmt. Der Lichtleiter ist an die Abstrahlcharakteristik des Leuchtkörpers angepaßt, wodurch mit einem kostengünstigen Leuchtkörper das abgestrahlte Licht mit einem hohen Wirkungsgrad in den Lichtleiter eingekoppelt werden kann. Durch den hohen Wirkungsgrad bei der Lichtaufnahme, können Leuchtkörper verwendet werden, die weniger Licht abstrahlen, wie besonders vorteilhaft Glimmlampen, die gegenüber Glühlampen langlebiger und preiswerter und erschütterungsunempfindlicher sind. In der Regel werden die Leuchtkörper in Haushaltsgeräten mit Netzspannung betrieben. Bei Glimmlampen reicht dabei ein kostengünstiger Kleinleistungsvorwiderstand aus, im Gegensatz zu Glühlampen, die einen Hochleistungswiderstand benötigen. Neben einem Kostenvorteil heizt sich ein Kleinleistungsvorwiderstand nur geringfügig auf und es muß nur eine geringe Menge an Wärme abgeführt werden. Um den Wirkungsgrad der optischen Anzeigevorrichtung weiter zu verbessern, wird gemäß der Erfindung vorgeschlagen, zumindest eine Begrenzungsfläche im Bereich des Leuchtkörpers anzuordnen, die zumindest einen Teil des nicht direkt in den Lichtleiter eingeleiteten Lichts über Reflexion und/oder Streuung in den Lichtleiter einkoppelt. Die Begrenzungsfläche kann von einem separaten Bauteil oder vorteilhaft von einer Fläche des Lichtleiters gebildet sein. Zusätzliche Bauteile und Montageschritte können eingespart werden.

Der Lichtleiter kann verschiedene Formen aufweisen, wie beispielsweise verschieden gebogene Stabformen usw. Besonders vorteilhaft ist er jedoch als Platte ausgeführt, wodurch mit deren Stirnseite eine große Anzeigefläche erzielt werden kann, die vorteilhaft der Kontur des Haushaltsgeräts angepaßt ist und dieses über einen großen Bereich umzieht.

In einer Ausgestaltung der Erfindung besitzt der plattenförmige Lichtleiter zumindest eine Öffnung in einer Deckseite, in die der Leuchtkörper in Längsrichtung im wesentlichen in Richtung einer Normalen des Lichtleiters eingesteckt ist, so daß dieser seitlich rundum Licht im wesentlichen parallel zum plattenförmigen Lichtleiter abstrahlt. Das seitlich abgestrahlte Licht kann direkt in den plattenförmigen Lichtleiter eingeleitet und ohne größere Umlenkung im Lichtleiter weitergeleitet werden. Im Lichtleiter können große Reflexionswinkel erreicht werden, wodurch das Licht besonders günstig über Totalreflexion weitergeleitet werden kann. Ferner kann der Lichtleiter vorteilhaft mit großen, kostengünstig zu fertigenden Reflexionsflächen ausgeführt werden. Anstatt über Totalreflexion kann das Licht im Lichtleiter beispielsweise über verspiegelte Deckseiten weitergeleitet werden.

Im mittleren Bereich von Haushältsgeräten sind oftmals Kupplungseinheiten für eine Stromversorgung oder sonstige Bauteile angeordnet, die durch Ausnehmungen einer waagerecht angeordneten Lichtleiterplatte geführt werden müssen. Ferner kann mit Ausnehmungen Material eingespart werden. An einer Begrenzungsfläche im Bereich der Ausnehmung Wird Licht zur Anzeige fläche umgelenkt. Der in Richtung der Ausnehmung gerichtete Lichtanteil wird zur Anzeige genutzt und der Wirkungsgrad gesteigert. Die Begrenzungsfläche kann von einem zusätzlichen Bauteil oder vorteilhaft von einer Stimfläche des Lichtleiters gebildet werden, wodurch zusätzliche Bauteile eingespart werden können. Ferner wird vorteilhaft an der vom Lichtleiter gebildeten Fläche das Licht über Totalreflexion umgelenkt. Das Aufbringen von reflektierenden oder das Licht streuenden Materialien kann eingespart werden.

Erfindungsgemäß besteht die Begrenzungsfläche aus zumindest einer in Richtung der Normalen des plattenförmigen Lichtleiters geneigten Reflexionsfläche, wodurch große, einfach und kostengünstig zu fertigende Reflexionsflächen geschaffen werden können. Ist der Lichtleiter aus einem Material, das einen Grenzwinke! für Totalreflexion kleiner als 45 Grad aufweist, kann vorteilhaft mit zwei um 45 Grad geneigten Flächen die Richtung des Lichts in zumindest einer Ebene umgekehrt werden. Parallel zum plattenförmigen Lichtleiter in Richtung der Begrenzungsfläche verlaufendes Licht kann in parallel in Richtung der Anzeigefläche verlaufendes Licht umgekehrt werden. Ferner können große Reflexionswinkel beibehalten werden, was eine Totalreflexion im Lichtleiter zur Weiterleitung des Lichts begünstigt.

In einer weiteren vorteilhaften Ausgestaltung der Erfindung wird die Begrenzungsfläche im Bereich der Ausnehmung dazu genutzt, das Licht gezielt in zumindest einen Bereich der Anzeigefläche zur Verstärkung der Leuchtdichte zu lenken. Die Leuchtdichte kann in Bereichen verstärkt werden, in denen die Leuchtdichte des direkt ausgestrahlten Lichts gegenüber anderen Bereichen geringer ist, so daß insgesamt an der Anzeigefläche eine gleichmäßige Leuchtdichte entsteht. Ferner ist möglich, gezielt einzelne Bereiche der Anzeigefläche mit einer insgesamt größeren Leuchtdichte zu erzeugen, beispielsweise um ein Muster zu erhalten usw.

Neben einer gezielten Einkopplung und Weiterleitung des Lichts, kann mit einer gezielten Lichtabstrahlung aus der Anzeigefläche der Wirkungsgrad der Anzeigevorrichtung verbessert, d.h. ein besseres Erkennen der optischen Anzeigevorrichtung erreicht werden. Erfindungsgemäß wird dies vorteilhaft mit zumindest einer Begrenzungsfläche erreicht, die das Licht vor der Anzeigefläche umlenkt, so daß das Licht in einem definierten Winkelbereich aus der Anzeigefläche austritt, vorzugsweise in Richtung eines gewöhnlichen Sichtfelds eines Benutzers. Ferner kann mit einer unglatten Oberflächenkontur das Licht gestreut, Bereiche mit einer unterschiedlichen Leuchtdichte angeglichen und eine Totalreflexion an der Anzeigefläche vermieden werden. Die Oberfläche kann beispielsweise errodierrauh und/oder mit primatischen Gebilden, Wölbungen, Kalotten usw., versehen sein.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ansicht eines Lichtleiters von oben,
- Fig. 2: einen Schnitt entlang der Linie II-II in Fig. 1,
- Fig. 3: eine vergrößerte Ansicht des mit III gekennzeichneten Ausschnitts in Fig. 2,
- Fig. 4: eine Variante nach Fig. 3,
- Fig. 5: eine vergrößerte Ansicht des mit V gekennzeichneten Ausschnitts in Fig. 2,
- Fig. 6: eine vergrößerte Ansicht des mit VI gekennzeichneten Ausschnitts in Fig. 1,
- Fig. 7: eine vergrößerte Ansicht des mit VII gekennzeichneten Ausschnitts in Fig. 2 und
- Fig. 8 u. 9: Varianten nach Fig. 6.

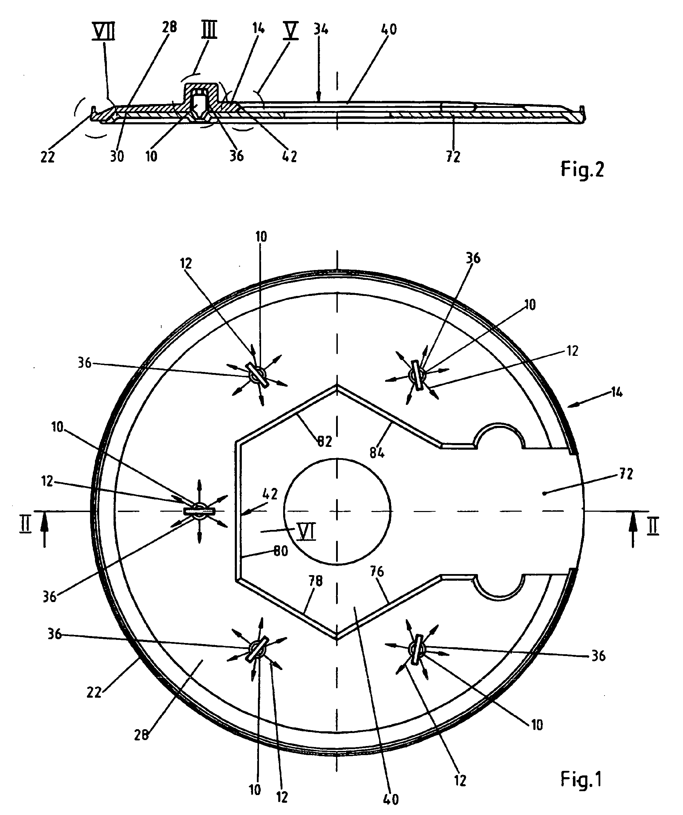

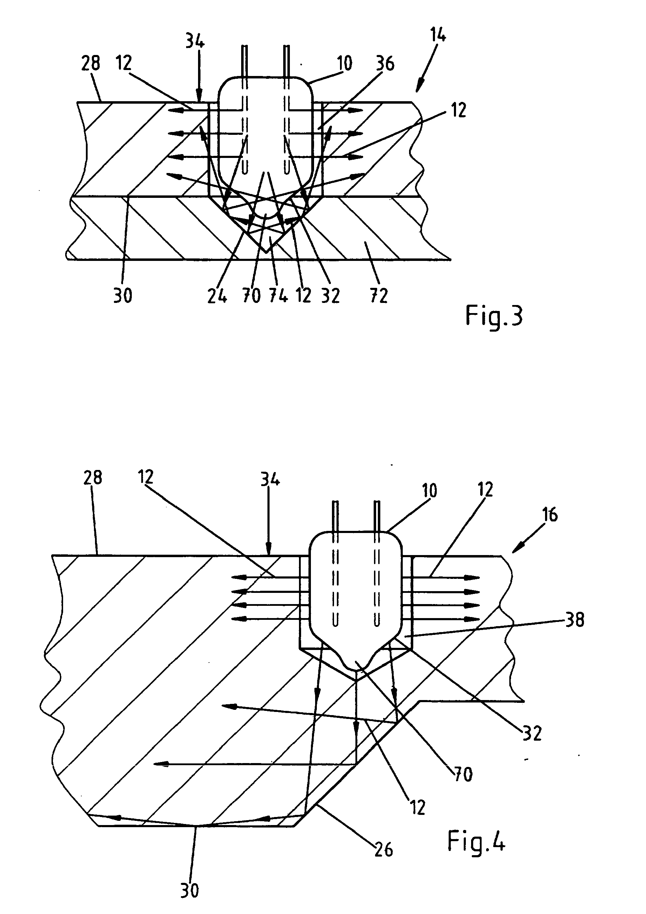

Fig. 1 zeigt eine optische Anzeigevorrichtung mit einem Lichtleiter 14 für ein nicht näher dargestelltes elektrisches Haushaltsgerät, beispielsweise einen Wasserkocher usw. Der Lichtleiter 14 ist aus Polymethacryla und hat die Form einer Platte mit einer oberen und einer unteren Deckseite 28, 30 (Fig. 2) und einer als Anzeigefläche 22 dienenden Stirnseite. Anstatt Polycarbonat können auch andere, dem Fachmann geläufige, lichtleitende Materialien verwendet werden, wie beispielsweise Polycarbonat t usw. Die Anzeigefläche 22 ist einer Kontur eines runden Haushaltsgeräts angepaßt und umzieht dies über einen großen Bereich. Ferner weist die Anzeigevorrichtung fünf Leuchtkörper 10 auf, und zwar Glimmlampen mit einem Glaskolben, die im wesentlichen Licht 12 seitlich rundum über eine Zylinderfläche des Glaskolbens und einen geringen Teil über eine Stirnseite 32 mit einem Saugstutzen 70 abstrahlen (Fig. 3). Der Lichtleiter 14 weist Öffnungen 36 auf, in die die Leuchtkörper 10 jeweils in Längsrichtung in Richtung einer Normalen 34 des Lichtleiters eingesteckt sind (Fig. 3). Die Leuchtkörper 10 strahlen einen Großteil ihres Lichts 12 parallel zum plattenförmigen Lichtleiter 14 rundum ab. Der Lichtleiter 14 umschließt den Leuchtkörper 10 seitlich rundum und nimmt das abgestrahlte Licht 12 rundum zur Weiterleitung zur Anzeigefläche 22 auf (Fig. 1 u. 3).

Der Lichtleiter 14 ist auf einer Bodenplatte 72 befestigt (Fig. 2). Die Materialdicke des Lichtleiters 14 ist geringfügig dünner als die Länge des Glaskolbens des Leuchtkörpers 10, so daß der Glaskolben in einer die Öffnung 36 bildenden durchgehenden Bohrung weitgehend vollständig umschlossen ist (Fig. 3). Um Lichtleitermaterial einzusparen, nimmt die Materialdicke zur Anzeigefläche 22 ab (Fig. 2). Der Glaskolben ragt mit seinem Saugstutzen 70 über die untere Deckseite 30 des Lichtleiters 14 in eine kegelförmige Senkung 74 der Bodenplatte 72. An einer von der Senkung 74 gebildeten Begrenzungsfläche 24 wird über die Stirnseite 32 abgestrahltes, nicht direkt in den Lichtleiter 14 eingekoppeltes Licht 12 über Streuung in den Lichtleiter 14 eingekoppelt.

Fig. 4 zeigt eine Variante zu Fig. 3, bei der die Materialdicke eines Lichtleiters 16 zumindest im Bereich des Leuchtkörpers 10 dicker ist als die Länge des Glaskolbens. Im wesentlichen gleichbleibende Bauteile sind mit den gleichen Bezugszeichen beziffert. Der Leuchtkörper 10 ist in eine von einem Sackloch gebildete Öffnung 38 eingesteckt. Das über die Stirnseite 32 abgestrahlte Licht 12 des Leuchtkörpers 10 wird in den Lichtleiter 16 eingekoppelt und über eine Begrenzungsfläche 26 über Totalreflexion zu der Anzeigefläche 22 geleitet.

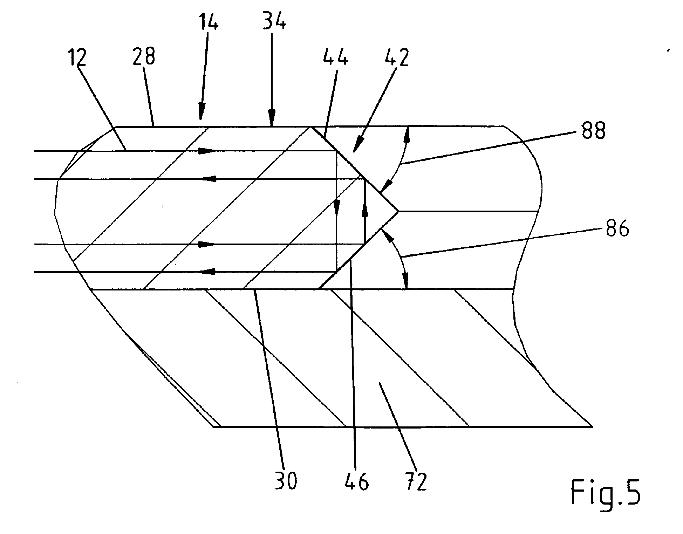

Der Lichtleiter 14 weist im mittleren Bereich eine Ausnehmung 40 auf, um eine nicht näher dargestellte Kupplungseinheit des Haushaltsgeräts durch den waagerecht eingebauten plattenförmigen Lichtleiter 14 zu führen (Fig. 1). Das in Richtung der Ausnehmung 40 abgestrahlte Licht 12 wird mit einer im Bereich der Ausnehmung 40 angeordneten Begrenzungsfläche 42 in Richtung der Anzeigefläche 22 umgelenkt. Die Begrenzungsfläche 42 wird von einer Stirnseite des Lichtleiters 14 gebildet, an der über Totalreflexion das Licht 12 umgelenkt wird. Die Begrenzungsfläche 42 wird aus fünf geradlinigen Segmenten 76, 78, 80, 82, 84 gebildet (Fig. 1), die wiederum in Längsrichtung zwei Reflexionsflächen 44, 46 aufweisen (Fig. 5). Die Reflexionsflächen 44, 46 sind in Richtung der Normalen 34 geneigt und schließen mit der oberen Deckseite 28 bzw. mit der unteren Deckseite 30 jeweils einen Winkel 86, 88 von 45 Grad ein (Fig. 5). Trifft im Lichtleiter 14 parallel verlaufendes Licht 12 auf eine der Reflexionsflächen 44 oder 46, wird dieses zumindest in einer Ebene in seiner Richtung über Totalreflexion umgekehrt und parallel im Lichtleiter 14 zur Anzeigefläche 22 geleitet.

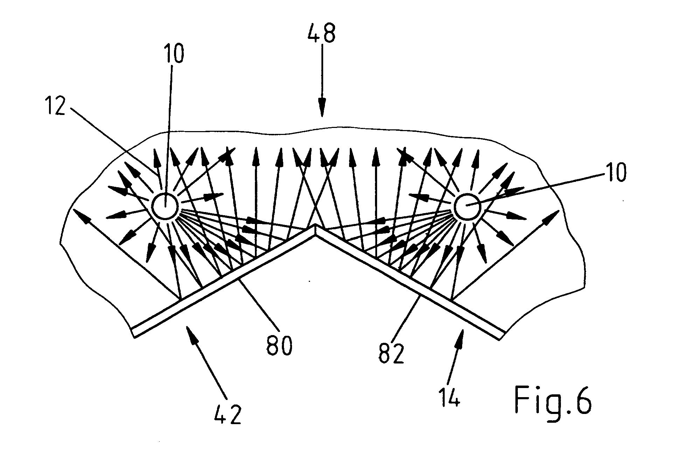

Das Licht 12 wird an den geradlinigen Segmenten 76, 78, 80, 82, 84 aufgestreut (Fig. 6). Durch Überlagerung des Lichts 12 von zwei Leuchtkörpem 10 wird gezielt in einem Bereich 48 zwischen den Leuchtkörpern 10 die Leuchtdichte erhöht, so daß an der Anzeigefläche 22 eine insgesamt gleichmäßige Leuchtdichte entsteht.

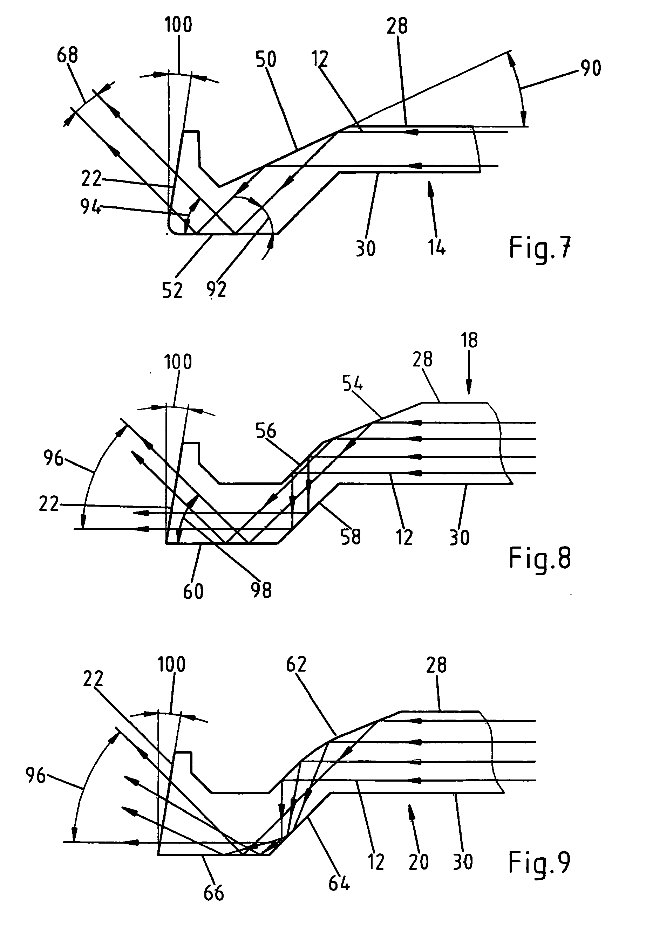

Das Licht 12 wird im Lichtleiter 14 über Totalreflexion zur Anzeigefläche 22 geleitet. Damit das Licht 12 aus der Anzeigefläche 22 in einem definierten Winkelbereich 68 austritt, wird dieses vor der Anzeigefläche an zwei Begrenzungsflächen 50, 52 über Totalreflexion umgelenkt (Fig. 7). Eine Brechung des Lichts 12 an der Anzeigefläche 22 ist in den Fig. 7, 8 und 9 graphisch vernachlässigt. Die Begrenzungsflächen 50, 52 werden durch eine abgekröpfte Partie des Lichtleiters 14 erreicht. Die erste Begrenzungsfläche 50 weist einen Winkel 90 von 22,5 Grad auf, der kleiner oder gleich einem halben Grenzwinkel für Totalreflexionist. Das parallel im plattenförmigen Lichtleiter 14 verlaufende Licht 12 wird an der Begrenzungsfläche 50 über Totalreflexion zur Begrenzungsfläche 52 umgelenkt, trifft auf diese in einem Winkel 92 von 45 Grad auf und wird unter einem Winkel 94 von 45 Grad über Totalreflexion nach oben aus der Anzeigefläche 22 in einem definierten Winkelbereich 68 abgestrahlt. Bei Haushalts-Standgeräten oder Küchengeräten, mit denen auf einer Arbeitsplatte einer Kücheneinrichtung gearbeitet wird und die im allgemeinen in stehender Position bedient werden, liegt die Anzeigefläche unterhalb der Augenhöhe. Bei der erfindungsgemäßen Lösung wird vorteilhaft das Licht 12 aus der Anzeigefläche 22 nach oben in Richtung des Sichtfelds eines Benutzers abgestrahlt und ist dadurch besonders gut erkennbar. Um eine Totalreflexion an der Anzeigefläche 22 zu verhindern, ist diese um einen Winkel 100 zur Mitte des Lichtleiters 14 geneigt.

In einem Ausführungsbeispiel in Fig. 8 ist ein Lichtleiter 18 mit vier Begrenzungsflächen 54, 56, 58, 60 dargestellt, an denen das Licht 12 über Totalreflexion umgelenkt wird. Gleichbleibende Bauteile sind grundsätzlich mit den gleichen Bezugszeichen beziffert. Das parallel im plattenförmigen Lichtleiter 18 verlaufende Licht 12 wird durch die zwei Begrenzungsflächen 54, 56 in zwei Teillichtströme aufgeteilt. Ein erster Teillichtstrom wird an der Begrenzungsfläche 54 und an der Begrenzungsfläche 60 umgelenkt und in einem Winkel 96 von ca. 45 Grad aus der Anzeigefläche 22 abgestrahlt. Ein zweiter Teillichtstrom wird an der Begrenzungsfläche 56 und an der Begrenzungsfläche 58 reflektiert und parallel zum Lichtleiter 18 aus der Anzeigefläche 22 abgestrahlt. Es wird ein größerer Winkelbereich 96 erreicht als bei dem Ausführungsbeispiel in Fig. 7. Das aus der Anzeigefläche 22 austretende Licht 12 kann aus unterschiedlichen Positionen, beispielsweise aus kurzer Entfernung, weiter Entfernung, bei unterschiedlicher Stellhöhe des Geräts usw., gut erkannt werden.

Die Aufteilung des Lichtstroms in zwei Teillichtströme kann ferner mit einer gekrümmten Begrenzungsfläche 62 erreicht werden, wie dies an einem Lichtleiter 20 in Fig. 9 dargestellt ist. Das Licht 12 wird an der gekrümmten Begrenzungsfläche 62 aufgefächert und zu zwei Begrenzungsflächen 64, 66 über Totalreflexion umgelenkt. An den Begrenzungsflächen. 64, 66 wird das Licht 12 reflektiert und in einem Winkelbereich 96 aus der Anzeigefläche abgestrahlt.

Um einen hohen Wirkungsgrad beim Einkoppeln des Lichts 12 und bei der Totalreflexion im Lichtleiter 14, 16, 18, 20 zu erreichen, sind bis auf die Anzeigefläche 22 alle Oberflächen des Lichtleiters 14, 16, 18, 20 hochglänzend bzw. besonders glatt ausgebildet. Die Anzeigefläche 22 ist errodierrauh ausgeführt, um das Licht 12 zu streuen und eine Totalreflexion an der Anzeigefläche 22 zu vermeiden.

### Bezugszeichen

- 10: Leuchtkörper
- 12: Licht
- 14: Lichtleiter
- 16: Lichtleiter
- 18: Lichtleiter
- 20: Lichtleiter
- 22: Anzeigefläche
- 24: Begrenzungsfläche
- 26: Begrenzungsfläche
- 28: Deckseite
- 30: Deckseite
- 32: Stirnseite
- 34: Normale
- 36: Öffnung
- 38: Öffnung
- 40: Ausnehmung
- 42: Begrenzungsfläche
- 44: Reflexionsfläche
- 46: Reflexionsfläche
- 48: Bereich
- 50: Begrenzungsfläche
- 52: Begrenzungsfläche
- 54: Begrenzungsfläche
- 56: Begrenzungsfläche
- 58: Begrenzungsfläche
- 60: Begrenzungsfläche
- 62: Begrenzungsfläche
- 64: Begrenzungsfläche
- 66: Begrenzungsfläche
- 68: Winkelbereich
- 70: Saugstutzen
- 72: Bodenplatte
- 74: Senkung
- 76: Segment
- 78: Segment
- 80: Segment
- 82: Segment
- 84: Segment
- 86: Winkel
- 88: Winkel
- 90: Winkel
- 92: Winkel
- 94: Winkel
- 96: Winkelbereich
- 98: Winkel
- 100: Winkel

## Patentansprüche

1. Optische Anzeigevorrichtung für elektrische Haushaltsgeräte mit zumindest einem Leuchtkörper (10) mit beliebiger Lichtabstrahlcharakteristik und mit zumindest einem plattenförmigen Lichtleiter (14, 16, 18, 20), der eine als Anzeigefläche (22) dienen de Stirnfläche aufweist und den Leuchtkörper (10) rundum zumindest in einem Bereich vollständig umschließt und rundum Licht (12) zur Weiterleitung zur Anzeigefläche (22) aufnimmt und mindestens eine Öffnung (36, 38) aufweist, in die der Leuchtkörper (10) in Längsrichtung im wesentlichen in Richtung einer Normalen (34) des plattenförmigen Lichtleiters (14, 16, 18, 20) eingesteckt ist und im mittleren Bereich zumindest eine Ausnehmung (40) mit einer Begrenzungsfläche (42) aufweist, die das Licht (12) über Totalreflexion und/oder Streuung zur Anzeigefläche (22) umlenkt und zumindest eine Begrenzungsfläche (24, 26) im Bereich des Leuchtkörpers (10) aufweist, die zumindest einen Teil des nicht direkt in den Lichtleiter (14, 16) eingekoppelten Lichts (12) über Reflexion und/oder Streuung in den Lichtleiter (14, 16) einkoppelt, und zumindest eine weitere Begrenzungsfläche (50. 52, 54, 56, 58, 60, 62, 64, 66) aufweist, die das Licht (12) vor der Anzeigefläche (22) umlenkt, so daß das Licht (12) in einem definierten Winkelbereich (68, 96) aus der Anzeigefläche (22) austritt, **dadurch gekennzeichnet, daß**
die Begrenzungsfläche (42) der Ausnehmung aus zumindest einer in Richtung der Normalen (34) des Lichtleiters (14, 16, 18, 20) geneigten Reflexionsfläche (44, 46) besteht.

2. Optische Anzeigevorrichtung nach Anspruch 1, **dadurch gekennzeichnet, daß** der Lichtleiter (14, 16, 18, 20) aus einem Material mit einem Grenzwinkel für Totalreflexion kleiner als 45 Grad ist und die Begrenzungsfläche (42) mit zwei um 45 Grad geneigten Reflexionsflächen (44, 46) die Richtung des Lichts (12) in zumindest einer Ebene umkehrt.

3. Optische Anzeigevorrichtung nach Anspruch 1 oder 2, **dadurch gekennzeichnet daß** die Begrenzungsfläche (42) das Licht (12) gezielt in zumindest einen Bereich (48) der Anzeigefläche (22) zur Verstärkung der Leuchtdichte lenkt.

4. Optische Anzeigevorrichtung nach einem der vorhergehenden Ansprüche, **dadurch gekennzeichnet, daß** der Leuchtkörper (10) eine Glimmlampe ist.

5. Optische Anzeigevorrichtung nach einem der vorhergehenden Ansprüche, **dadurch gekennzeichnet, daß** der Lichtleiter (14, 16, 18, 20) das Licht (12) über Totalreflexion zur Anzeigefläche (22) leitet.

6. Optische Anzeigevorrichtung nach einem der vorhergehenden Ansprüche, **dadurch gekennzeichnet, daß** die Anzeigefläche (22) eine unglatte Oberflächenkontur aufweist und das Licht (12) streut.

## Claims

1. Optical indicating device for electrical domestic appliances with at least one lighting body (10) with a desired light irradiation characteristic and with at least one plate-shaped optical conductor (14, 16, 18, 20), which has an end surface serving as an indicating surface (22) and completely encloses the lighting body (10) all around at least in a region and which receives light (12) all around for conducting on to the indicating surface (22) and has at least one opening (36, 38), into which the lighting body (10) is plugged in longitudinal direction substantially in the direction of a normal (34) of the plate-shaped optical conductor (14, 16, 18, 20) and has in the centre region at least one recess (40) with a boundary surface (42), which deflects the light (12) by way of total reflection and/or diffusion to the indicating surface (22) and has at least one boundary surface (24, 26) in the region of the lighting body (10), which couples into the optical conductor (14, 16) by way of reflection and/or diffusion at least a part of the light (12) not directly coupled into the optical conductor (14, 16) and has at least one further boundary surface (50, 52, 54, 56, 58, 60, 62, 64, 66) which deflects the light (12) in front of the indicating surface (22) so that the light (12) issues from the indicating surface (22) in a defined angular range (68, 96), **characterised in that** the boundary surface (42) consists of at least one reflection surface (44, 46) inclined in the direction of the normal (34) of the optical conductor (14, 16, 18, 20).

2. Optical indicating device according to claim 1, **characterised in that** the optical conductor (14, 16, 18, 20) is of a material with a boundary angle for total reflection less than 45 degrees and the boundary surface (42) by two reflection surfaces (44, 46) inclined by 45° reverses the direction of the light (12) in at least one plane.

3. Optical indicating device according to claim 1 or 2, **characterised in that** the boundary surface (42) selectively deflects light (12) in at least one region (48) of the indicating surface (22) for amplifying the light intensity.

4. Optical indicating device according to one of the preceding claims, **characterised in that** the lighting body (10) is a glow lamp.

5. Optical indicating device according to one of the preceding claims, **characterised in that** the optical conductor (14, 16, 18, 20) conducts the light (12) to the indicating surface (22) by way of total reflection.

6. Optical indicating device according to one of the preceding claims, **characterised in that** the indicating surface (22) has an unsmooth surface contour and diffuses the light (12).

## Revendications

1. Dispositif d'affichage optique pour appareils électroménagers, comprenant au moins un corps lumineux (10) avec une caractéristique quelconque de rayonnement de la lumière et au moins un guide de lumière (14, 16, 18, 20) en forme de plaque, lequel présente une face frontale servant de surface d'affichage (22) et entoure entièrement le corps lumineux (10) sur son pourtour dans au moins une zone et reprend de la lumière (12) sur le pourtour pour la retransmettre à la surface d'affichage (22) et comporte au moins un trou (36, 38), dans lequel le corps lumineux (10) est emboîté dans le sens longitudinal sensiblement dans le sens d'une normale (34) au guide de lumière (14, 16, 18, 20) en forme de plaque, et comporte, dans la zone centrale, au moins un évidement (40) avec une surface de délimitation (42), qui dévie la lumière (12) vers la surface d'affichage (22) par réflexion totale et/ou dispersion et comporte au moins une surface de délimitation (24, 26) dans la zone du corps lumineux (10), laquelle injecte dans le guide de lumière (14, 16), par réflexion et/ou dispersion, au moins une partie de la lumière (12) non directement injectée dans le guide de lumière (14, 16), et comporte au moins une autre surface de délimitation (50, 52, 54, 56, 58, 60, 62, 64, 66) qui dévie la lumière (12) devant la surface d'affichage (22) de sorte que la lumière (12) sort de la surface d'affichage (22) dans une plage angulaire définie (68, 96), **caractérisé en ce que** la surface de délimitation (42) de l'évidemment se compose d'au moins une surface de réflexion (44, 46) inclinée en direction de la normale (34) au guide de lumière (14, 16, 18, 20).

2. Dispositif d'affichage optique selon la revendication 1, **caractérisé en ce que** le guide de lumière (14, 16, 18, 20) est composé d'une matière avec un angle limite de réflexion totale inférieur à 45 degrés et la surface de délimitation (42), avec deux surfaces de réflexion (44, 46) inclinées de 45 degrés, inverse le sens de la lumière (12) dans au moins un plan.

3. Dispositif d'affichage optique selon la revendication 1 ou 2, **caractérisé en ce que** la surface de délimitation (42) dirige la lumière (12) de manière ciblée vers au moins une zone (48) de la surface d'affichage (22) pour renforcer la luminance.

4. Dispositif d'affichage optique selon l'une des revendications précédentes, **caractérisé en ce que** le corps lumineux (10) est une lampe à décharge.

5. Dispositif d'affichage optique selon l'une des revendications précédentes, **caractérisé en ce que** le guide de lumière (14, 16, 18, 20) dirige la lumière (12) vers la surface d'affichage (22) par réflexion totale.

6. Dispositif d'affichage optique selon l'une des revendications précédentes, **caractérisé en ce que** la surface d'affichage (22) présente un contour de surface non lisse et disperse la lumière (12).
